# FASCICULE DE BREVET EUROPEEN

(11) **EP 3 253 599 B1**
(45) Date de publication et mention de la délivrance du brevet: **19.06.2019**
(21) Numéro de dépôt: 16700498.5
(22) Date de dépôt: 14.01.2016
(51) Int. Cl.: B60C 15/02, B60C 5/16, B60B 21/12

(54) **ENSEMBLE ROULANT**
WALZENANORDNUNG
ROLLING ASSEMBLY

(30) Priorité: 05.02.2015 FR 1550886
(43) Date de publication de la demande: 13.12.2017
(73) Titulaire: Compagnie Générale des Etablissements Michelin, 63000 Clermont-Ferrand (FR)
(72) Inventeur: MERINO LOPEZ, José, 63040 Clermont-Ferrand Cedex 9 (FR)
(74) Mandataire: Bauvir, Jacques
(86) Numéro de dépôt international: PCT/EP2016/050688
(87) Numéro de publication internationale: WO 2016/124366

(56) Documents cités:
- EP-A1- 3 197 690
- WO-A1-00/78565
- WO-A1-2016/046197
- CN-A- 101 941 363
- FR-A1- 2 491 836

## Description

L'invention concerne un ensemble roulant formé principalement d'un pneumatique et d'une jante et destiné aux véhicules de tourismes, camionnettes.

On rappelle ci-après les définitions utilisées dans la présente invention :
- « direction axiale » : direction parallèle à l'axe de rotation du pneumatique,
- « direction radiale » : direction coupant l'axe de rotation du pneumatique et perpendiculaire à celui-ci,
- « direction circonférentielle » : direction perpendiculaire à un rayon et comprise dans un plan perpendiculaire à l'axe de rotation du pneumatique,
- « coupe radiale » : coupe selon un plan qui contient l'axe de rotation du pneumatique,
- « plan équatorial » : plan perpendiculaire à l'axe de rotation et qui passe par le milieu de la bande de roulement

Dans la demande WO00/78565 il est déjà connu d'insérer, entre la jante et les bourrelets d'un pneumatique, un adaptateur élastique. Cet adaptateur est déformable élastiquement, dans les directions radiale et axiale. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais si un tel ensemble permet également d'assurer les fonctions d'un pneumatique classique, et notamment une réponse en poussée de dérive du pneumatique suivant l'application d'un angle de dérive au pneumatique qui permet ainsi à l'ensemble une flexibilité suffisante pour lui éviter toute dégradation de surface ou en profondeur, il ne diminue toutefois pas parfaitement l'usure du pneumatique et de l'adaptateur lors des rares cas de mise à plat dudit pneumatique, par exemple suite à un choc trottoir ou dans un nid de poule ou encore suite à la perforation par des objets de petits ou grands diamètres (supérieur ou égale à 7mm).

En effet, dans ces rares cas, le pneumatique roulant à plat sera en contact avec l'adaptateur de manière inégale du fait de vitesses différentes entre celle du pneumatique et celle de l'adaptateur. Cette différence de vitesse se traduit par un phénomène de glissement entre le pneumatique et l'adaptateur. Ce glissement provoquera l'usure prématurée du pneumatique et de l'adaptateur.

Aucune suggestion n'est donnée dans ce document sur des adaptations d'architecture qui aboutiraient à diminuer cette usure.

Aussi il subsiste le besoin de disposer d'un nouveau dispositif comprenant un adaptateur qui assure une meilleure protection du pneumatique lors d'un roulage à plat, suite à un choc violent ou à une perforation, tout en évitant le cumul de l'électricité statique susceptible d'engendrer des étincelles.

L'invention a donc pour objet un ensemble monté roulant ayant un axe de rotation comprenant :
- un pneumatique ayant deux bourrelets et une paroi intérieure,
- au moins un adaptateur,
- une jante,
- ledit adaptateur assurant la jonction entre l'un des bourrelets et la jante, et ayant un pourtour circonférentiel,
ladite jante ayant deux sièges de jante et deux crochets de jante,
ledit adaptateur ayant :
- une extrémité axialement intérieure destinée à être montée sur le siège de la jante et comprenant un élément de renfort intérieur,
- une extrémité axialement extérieure comprenant un élément de renfort extérieur,
- un corps connectant ladite extrémité extérieure avec ladite extrémité intérieure de manière à former une pièce unitaire et comprenant au moins une armature de renforcement principale assurant la liaison entre ledit renfort extérieur et ledit renfort intérieur,
- un siège d'adaptateur sensiblement cylindrique destiné à recevoir l'un desdits bourrelets, ledit siège étant situé à l'extrémité axialement extérieure dudit corps,
- une face d'appui d'adaptateur sensiblement comprise dans un plan perpendiculaire à l'axe de rotation, ladite face d'appui étant située sur la face axialement intérieure de l'extrémité axialement extérieure.

L'adaptateur se caractérise en ce que l'élément de renfort de l'extrémité axialement extérieure est en totalité située axialement à l'extérieur de la face d'appui, en ce que le corps comprend en regard du siège d'adaptateur un renfort annulaire de siège et en ce que l'adaptateur comprend au moins une bande conductrice, amovible ou non, disposée sur la totalité ou sur une partie du pourtour circonférentielle dudit adaptateur, et sur un trajet complet allant du siège d'adaptateur à la jante J.

L'extrémité axialement extérieure de l'adaptateur délimite, axialement, un « logement destiné à recevoir le bourrelet du pneumatique ». La face d'appui de l'extrémité axialement extérieure sert d'appui, dans le sens axial, au bourrelet du pneumatique à l'instar d'un crochet de jante.

Ainsi le logement reçoit le bourrelet du pneumatique tout comme le fait classiquement le siège d'une jante. Le pneumatique est alors immobilisé axialement par la pression de gonflage, et est plaqué contre la face d'appui de cette extrémité axialement extérieure, à l'instar de ce qui est fait classiquement pour le bourrelet d'un pneumatique contre le crochet de jante d'une jante.

L'extrémité axialement intérieure de l'adaptateur pourrait être dénommée « bourrelet d'adaptateur » puisqu'elle est destinée à accrocher l'adaptateur sur le crochet de jante d'une jante à l'instar de ce qui est fait classiquement par le bourrelet d'un pneumatique.

Ainsi, en fonctionnement de l'ensemble roulant selon l'invention et aux sollicitations de service pour lesquelles il est conçu, le pneumatique est immobilisé axialement par rapport à la jante, plus précisément les bourrelets du pneumatique sont immobilisés axialement par rapport à la jante de la même façon que pour un ensemble roulant classique dans lequel les bourrelets du pneumatique sont montés directement sur les sièges d'une jante, alors que les bourrelets du pneumatique ne sont pas immobilisés radialement par rapport à la jante, plus précisément les bourrelets du pneumatique sont capables d'un degré de déplacement radialement par rapport à la jante. En roulage standard, on peut dire qu'il n'y a quasiment pas de déformation axiale de l'adaptateur, ou alors elle est négligeable par rapport à la déformation radiale.

En revanche, lors d'un choc, la déformation axiale de l'adaptateur peut être importante, contribuant ainsi à réduire les contraintes sur l'ensemble monté.

L'ensemble monté selon l'invention présente l'avantage d'être de constitution et de montage simples. L'ensemble monté selon l'invention permet par ailleurs de protéger le pneumatique contre les effets négatifs de l'électricité statique.

La présence de la bande conductrice permet en outre d'assurer la conduction de l'électricité entre le sol et la roue, et donc entre le sol et le véhicule notamment lorsque la conductivité des compositions élastomères n'est pas suffisante, et ceci d'autant plus que le pneumatique ne repose pas directement sur la roue mais sur un adaptateur.

Enfin l'adaptateur selon l'invention présente l'avantage de diminuer de manière significative le niveau des efforts mécaniques vers le châssis lors d'un choc, et de permettre ainsi d'alléger la caisse du véhicule.

Un autre objet de l'invention est un adaptateur tel que défini précédemment.

De préférence, la bande conductrice est disposée entièrement à la surface radialement externe au corps ou partiellement enfouie sous la surface radialement externe du corps.

De préférence, la bande conductrice présente une résistivité électrique inférieure ou égale à 10⁸ Ohm.cm, et de préférence inférieure ou égale à 10⁷ Ohm.cm.

De préférence, la bande conductrice est constituée au choix en une lame métallique ou en une composition élastomère comprenant du noir de carbone en une quantité supérieure ou égale à 15% et préférentiellement supérieure ou égale à 20%, le noir de carbone de la composition élastomère pouvant présenter une surface spécifique supérieure ou égale à 500m²/g.

De préférence, la bande conductrice est collée ou réticulée à la composition élastomère du corps.

De préférence, l'élément de renfort de l'extrémité axialement extérieur est disposé radialement à l'extérieur du siège d'adaptateur.

De préférence, le renfort annulaire de siège présente un module de compression supérieure ou égale à 1GPa, préférentiellement supérieure à 4GPa, et plus préférentiellement supérieure à 10GPa. Le renfort annulaire peut être constitué d'une âme entourée d'un élastomère, ou d'une succession de couches de composés élastomères et de renforts métalliques et/ou textiles disposés selon toutes les combinaisons possibles. L'âme peut comprendre au moins un élément choisi parmi un métal, un matériau composite, un thermoplastique et leur mélange. Le matériau composite peut être réalisé à base de fibres de verre noyées dans une matrice de résine.

Parmi les élastomères pouvant être utilisés, on liste, en premier lieu, les caoutchoucs réticulables par des réactions chimiques de vulcanisation par des ponts soufre, par des liaisons carbone-carbone créées par l'action de peroxydes ou de rayonnements ionisants, par d'autres chaînes d'atomes spécifiques de la molécule de l'élastomère, en second lieu, les élastomères thermoplastiques (TPE) où la partie déformable élastiquement forment un réseau entre des régions « dures » peu déformables dont la cohésion est le fruit de liaisons physiques (cristallites ou régions amorphes au-dessus de leur température de transition vitreuse), ensuite les élastomères non thermoplastiques et enfin les résines thermodurcissables.

Le renfort annulaire de siège peut être constitué d'au moins deux couches de constituants différents disposés successivement et en alternance. Par disposition en alternance, on définit une disposition successive d'une première puis d'une seconde couches, plusieurs fois.

Le renfort annulaire de siège peut avoir une longueur axiale totale supérieure ou égale à 30% de la largeur du bourrelet du pneumatique, et inférieure à 150% de cette même largeur, et plus préférentiellement comprise entre 40 et 110% de la largeur du bourrelet du pneumatique.

Le renfort annulaire de siège peut avoir une épaisseur radiale moyenne supérieure ou égale à 0,3mm et inférieure ou égale à 20mm en fonction de la dimension et de l'utilisation du pneumatique. Ainsi pour un pneumatique tourisme, l'épaisseur est de préférence comprise entre 0,5 et 10mm.

Le renfort annulaire de siège comprend de préférence au moins un élément choisi parmi un métal, un matériau composite, un thermoplastique, et leur mélange. Cet âme ou ce multicouche est de préférence compris entre deux couches d'une matrice comprenant au choix un élastomère tel que cité ci-dessus, une résine ou leurs mélanges.

Le renfort annulaire de siège est de préférence constitué d'un empilage de différentes couches de composés élastomères de nature chimique identique ou différente.

Lorsqu'il est sous forme d'un empilage de couches, le renfort a de préférence une longueur axiale supérieure à 5mm et inférieure à 25mm, et une épaisseur radiale supérieure ou égale à 0,1mm et inférieure ou égale à 4mm.

Chaque élément unitaire constituant l'empilage du renfort peut avoir une largeur axiale supérieure à 1mm et inférieure à 25mm, et une épaisseur radiale, identique ou différente, supérieure ou égale à 0,1mm et inférieure ou égale à 2mm.

Le renfort annulaire de siège peut encore se présenter sous la forme d'un empilage de fils unitaires entre une couche d'une matrice comprenant au choix un élastomère, un composé thermoplastique, une résine ou leurs mélanges. Les fils unitaires peuvent être des fils classiquement utilisés, tels que textiles (polyester, nylon, PET, aramide, rayonne, fibres naturelles (coton, lin chanvre)), métalliques, composites (carbone, verre-résine) ou les mélanges de ces constituants.

Le renfort annulaire de siège peut encore se présenter sous la forme d'une ou plusieurs nappes, dont les renforts sont disposés avec un angle compris entre 0 et 90° avec la direction circonférentielle du pneumatique.

De préférence, le renfort annulaire peut être disposé radialement à l'extérieur ou radialement à l'intérieur du corps de l'adaptateur, de part et d'autre dudit corps, ou bien encore, entre les nappes d'éléments de renforcement du corps de l'adaptateur.

L'élément de renfort extérieur peut être constitué en métal (acier), nylon, PET, aramide. Il peut comprendre une matrice en résine et/ou fibres de renforcement, telle que rayonne, aramide, PET, nylon, fibre de verre, fibre de carbone, fibre de basalte, poly(éthylène2,6 naphtalate) (PEN), polyvinyl alcool (PVA).

L'armature de renforcement principal dudit corps peut présenter un module supérieur ou égal à 4GPa ; il peut être constitué en métal (acier) en câble textile (rayonne, aramide, PET, nylon, fibre de de verre, fibre de carbone, fibre de basalte, poly(éthylène2,6 naphtalate) (PEN), polyvinyl alcool (PVA).

De préférence, l'adaptateur peut être disposé d'un seul côté de la jante, et préférentiellement du côté extérieur du véhicule. Dans ce cas, la jante possède une forme géométrique dissymétrique de manière à s'adapter à la présence de l'adaptateur présent sur un seul côté.

L'adaptateur peut également être présent de chaque côté de la jante.

Lorsque l'ensemble monté comprend deux adaptateurs, ces derniers peuvent être symétriques ou non symétriques. La notion de symétrie ou de dissymétrie de l'adaptateur est définie par la longueur axiale du corps de l'adaptateur. Deux adaptateurs sont dissymétriques lorsque le corps de l'un d'entre eux a une longueur axiale plus grande que celle de l'autre.

De préférence, la jante est constituée en un matériau choisi parmi l'acier, les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales, ou parmi toutes les combinaisons de matériaux.

Les matériaux composites n'étant pas conducteurs, l'ensemble monté comprend alors un élément conducteur disposé entre l'adaptateur et le moyeu ou le boulon de fixation.

De préférence, les matériaux composites à base de fibres comprennent des fibres ayant une longueur supérieure ou égale à 5mm.

La matrice à base de composés thermodurcissables peut être choisie parmi les résines époxy, le vinylester, les polyesters insaturés, le cyanate ester, le bismaléimide, les résines acryliques, les résines phénoliques, les polyuréthanes et leur combinaison.

De préférence, la matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

L'invention va maintenant être décrite à l'aide des exemples et des figures qui suivent et qui sont donnés uniquement à titre d'illustration et dans lesquelles :
- la figure 1 représente une vue schématique en coupe radiale de l'adaptateur non amovible, selon une première variante, et constituant l'ensemble monté selon l'invention,
- la figure 2 représente une vue schématique en coupe radiale d'un ensemble monté selon l'invention, comprenant un adaptateur non amovible sur la partie gauche de la figure, et amovible sur la partie droite de la figure,
- la figure 3 représente une vue schématique de côté de l'adaptateur constituant l'ensemble monté selon l'invention,
- la figure 4 représente une vue schématique en coupe radiale de l'adaptateur non amovible, selon une seconde variante, et constituant l'ensemble monté selon l'invention.

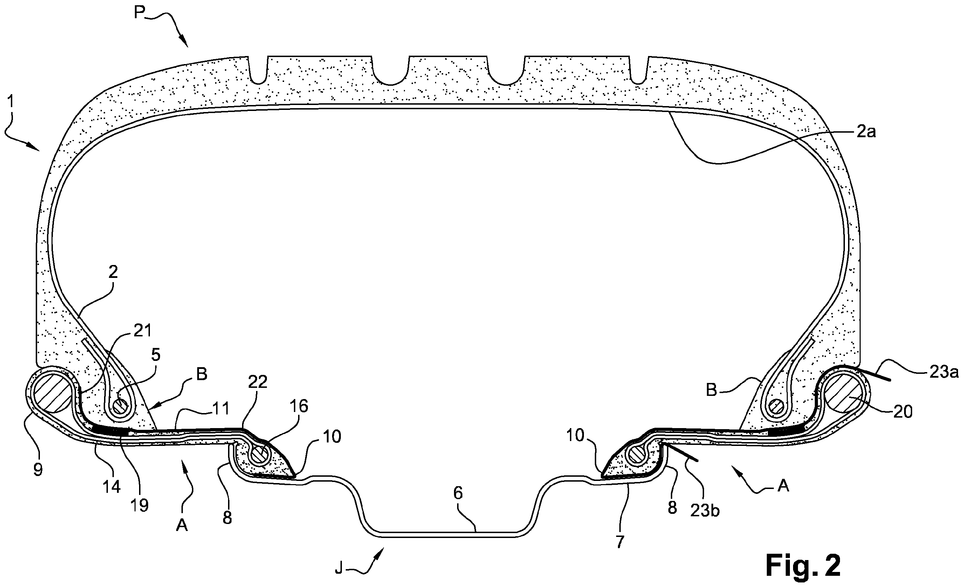

Comme le montre la figure 2, l'ensemble monté de référence générale 1 comprend un pneumatique P, monté sur deux adaptateurs A, eux-mêmes montés sur une jante J.

L'ensemble monté selon l'invention peut être mis en oeuvre avec tout type de pneumatique, qu'ils soient à carcasse radiale ou diagonale, voire à avec des pneumatiques de type à flancs autoporteurs.

Le montage de cet ensemble selon l'invention s'effectue de manière classique. Les adaptateurs sont tout d'abord disposés sur la jante, puis le pneumatique est disposé sur les adaptateurs.

Le pneumatique de conception en soi inchangée dans l'invention, est formé d'une bande de roulement renforcée par une armature de sommet réunie à deux bourrelets B de part et d'autre d'un plan équatorial XX', passant par le centre du pneumatique, par l'intermédiaire de deux flancs 1. Une armature de carcasse 2 renforçant principalement les flancs 1 est ancrée dans chaque bourrelet B à au moins une tringle, ici de type « tressée » 3 pour former des retournements 4.

La paroi radialement intérieure 2a de la nappe carcasse 2 est recouverte d'une couche de composition élastomère (non représentée) ayant pour fonction de rendre étanche le pneumatique au gaz.

La jante J comprend une gorge 6, dite de montage, et réunissant de part et d'autre du plan équatorial, deux sièges de jante 7 axialement prolongés par des crochets de jante 8 dont les bords radialement extérieurs sont recourbés.

L'adaptateur A comprend principalement une extrémité axialement extérieure 9, une extrémité axialement intérieure 10 et un corps 11 connectant ladite extrémité 9 à ladite extrémité 10.

L'extrémité axialement extérieure 9 comprend un élément de renfort extérieur 20. L'adaptateur A, disposé au niveau de chaque bourrelet B du pneumatique peut être symétrique ou non symétrique. Par symétrie, on définit que la longueur totale du corps 11 est identique sur les deux adaptateurs. Lorsque l'ensemble (pneumatique, jante et adaptateur) est monté, le bourrelet B du pneumatique est disposé sur un siège d'adaptateur 14 et mis en appui axial contre une face d'appui 21.

L'adaptateur comprend, d'une part, une extrémité axialement extérieur 9 avec un renfort extérieur 20, de forme géométrique sensiblement sphérique, en coupe, constitué en matériau composite tel que du verre-résine, d'autre part, une extrémité axialement intérieur 10 avec un renfort métallique 16, et enfin un corps 11 constitué de deux nappes (non représentées) comprenant des câbles textiles. Les câbles de chaque nappe sont parallèles entre eux. Lesdites nappes sont, d'une part, accolée axialement à l'intérieur et radialement à l'extérieur aux parois du renfort 20, et d'autre part, ancrée dans l'extrémité 10 au renfort métallique 16, tel qu'une tringle formant un retournement à chaque extrémité.

Le corps 11 comprend un siège d'adaptateur 14 sensiblement cylindrique destiné à recevoir un bourrelet du pneumatique disposé à l'extrémité axialement extérieure du corps 11.

Le corps 11 comprend également une face d'appui 21 d'adaptateur sensiblement comprise dans un plan perpendiculaire à l'axe de rotation, située sur la face axialement intérieure de l'extrémité axialement extérieure, et destinée à maintenir en place le bourrelet dans son logement.

Chaque adaptateur représenté sur la figure 2 comprend une bande conductrice 22. L'adaptateur de la partie gauche de la figure représente une bande conductrice 22 non amovible, et la partie droite de ladite figure une bande conductrice 22 amovible.

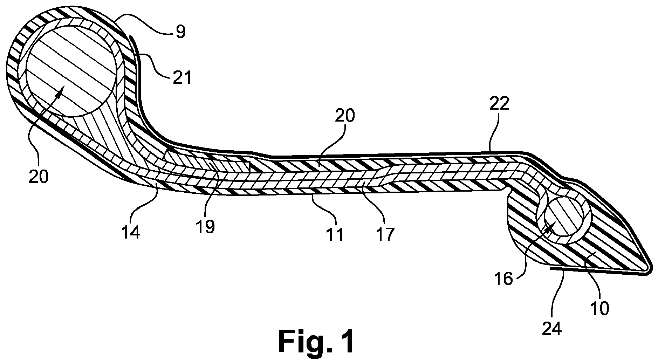

Comme le montre la figure 1, l'adaptateur comprend un renfort annulaire de siège 19 qui n'est pas solidaire du renfort extérieur 20. Ces deux renforts 19, 20 sont totalement indépendants l'un de l'autre.

Le renfort 19 est constitué d'un tricouche comprenant des renforts métalliques sous forme de fils, alternés avec un élastomère de type caoutchouc-résine. Le renfort 19 a une épaisseur radiale d'environ 1,5mm et une longueur axiale d'environ 15mm.

La couche d'élastomère du renfort 19 a une épaisseur radiale d'environ 0,3mm et une longueur axiale d'environ 15mm. Une couche d'élastomère recouvre l'ensemble des éléments constituant l'adaptateur, à savoir le renfort 20, le renfort 16, le corps 11 et, la surface radialement extérieure du renfort 20.

La bande conductrice 22 représentée sur la figure 1 est disposée sur un trajet allant du siège d'adaptateur 14 au crochet 8 de jante. Selon cette représentation, la bande conductrice 22 est non amovible, et est fixée à la surface d'un trajet qui s'étend du siège d'adaptateur 21 à la partie radialement intérieure de l'extrémité axialement intérieure 10.

L'ensemble selon la figure 2 comprend sur la partie gauche, une bande conductrice 22 disposée sur un trajet qui s'étend du siège d'adaptateur 14 au crochet 8 de jante. Cette bande conductrice 22 est partiellement enfouie sous la surface radialement externe des nappes constituant le corps 11. Cette bande 22 est constituée en une lame métallique présentant une épaisseur moyenne comprise entre 0,005 et 1mm.

La partie droite de la figure 2 représente une bande conductrice 22 amovible. Cette bande 22 n'est pas présente sur l'adaptateur mais est disposé sur l'ensemble monté lors du montage. Cette bande 22 est également disposée sur un trajet qui s'étend du siège d'adaptateur 14 au crochet 8 de jante. Des portions 23a, 23b de moyens de préhension reliés à la bande métallique dépassent de l'ensemble monté de manière à faciliter les étapes de démontage.

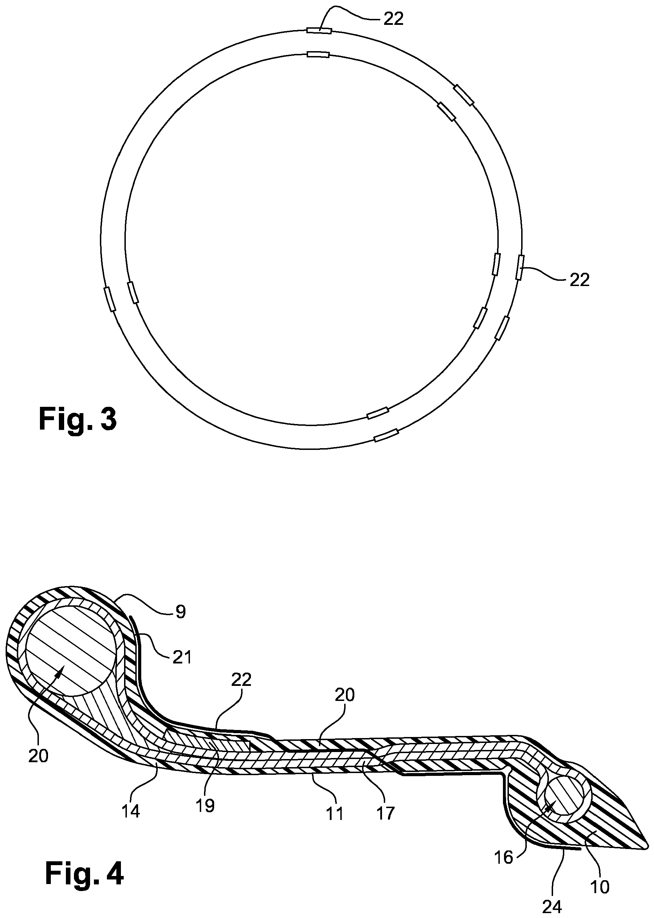

La figure 4 représente une variante de la pose de la bande conductrice sur l'adaptateur. Sur cette figure, on voit que la bande conductrice 22 est disposée de manière non amovible sur un trajet allant de la surface du siège d'adaptateur 14 à la partie radialement intérieure 24a de l'extrémité axialement intérieure 10 tout en passant par l'intérieure du corps 11 de l'adaptateur. Le passage dans le corps s'effectue de manière à respecter les nappes constituant l'adaptateur.

La figure 3 montre que l'adaptateur comprend différentes bandes conductrices 22, disposées de manière non régulière sur son pourtour circonférentiel. La représentation montre un espacement irrégulier de chaque bande conductrice 22.

Les exemples qui suivent montrent les résultats obtenus avec l'ensemble selon l'invention.

### Exemple : Essais sur choc trottoir

Cet essai consiste à faire monter un ensemble monté sur un trottoir selon un angle d'attaque de 30°. Le choix de cet angle est basé sur le fait qu'il constitue une sollicitation très pénalisante pour un pneumatique. L'essai s'effectue avec deux hauteurs de trottoir différentes (90mm et 110mm).

Le test se déroule de la manière suivante. On effectue plusieurs passages de la roue à des vitesses différentes jusqu'à obtenir la crevaison du pneumatique. La vitesse de départ est de 20km/h, puis on incrémente la vitesse de 5km/h à chaque nouveau passage.

On compare un ensemble classique sans adaptateur (témoin 1) à un ensemble muni d'un adaptateur selon le document WO00/78565 (témoin 2), et à un ensemble muni d'un adaptateur selon l'invention (invention). Ces ensembles sont tous de dimension 205/55R16 comprenant une jante 6.5J16. Les résultats sont rassemblés dans le tableau I suivant et sont donnés en pourcentage :

**Tableau I**

| | **Témoin 1** | **Témoin 2** | **Invention** |
|---|---|---|---|
| **Pourcentage de la vitesse de crevaison par rapport au témoin - hauteur trottoir 90mm** | 100 | >150 | >150 |
| **Niveau d'effort de portée verticale (Fz) relévée à la vitesse de crevaison** | 100 | 50 | 40 |
| **Etat de l'ensemble monté suite aux chocs** | -crevaison du pneu | -Pneu et roue intacts | Pneu, adaptateur et roue intacts |
| | - roue comprenant des marques | -Adaptateur déformé plastiquement | |

Les résultats supérieurs à 100 montrent une amélioration du comportement face à un choc latéral.

L'essai réalisé sur la hauteur de trottoir de 90mm aboutit à la crevaison du pneumatique témoin à une vitesse de 30km/h, alors que l'ensemble selon l'invention ne subit aucun dommage à cette même vitesse, voire à une vitesse de 50km/h.

L'essai réalisé sur la hauteur de trottoir de 110mm aboutit à la crevaison du pneumatique témoin à une vitesse de 20km/h, alors que l'ensemble selon l'invention ne subit aucun dommage à cette même vitesse, voire à une vitesse de 50km/h.

## Revendications

1. Ensemble monté roulant ayant un axe de rotation comprenant :
- un pneumatique (P) ayant deux bourrelets et une paroi intérieure,
- au moins un adaptateur (A),
- une jante (J),
- ledit adaptateur assurant la jonction entre l'un des bourrelets et la jante, et ayant un pourtour circonférentiel,
ladite jante ayant deux sièges (7) de jante et deux crochets (8) de jante,
ledit adaptateur ayant :
- une extrémité axialement intérieure (10) destinée à être monté sur le siège (7) de la jante et comprenant un élément de renfort intérieur (16),
- une extrémité axialement extérieure (9) comprenant un élément de renfort extérieur (20),
- un corps (11) connectant ladite extrémité extérieure avec ladite extrémité intérieure de manière à former une pièce unitaire et comprenant au moins une armature de renforcement principale assurant la liaison entre ledit renfort extérieur et ledit renfort intérieur, et une composition élastomère,
- un siège d'adaptateur (14) sensiblement cylindrique destiné à recevoir l'un desdits bourrelets, ledit siège (14) étant situé à l'extrémité axialement extérieure (9) dudit corps (11),
- une face d'appui (21) d'adaptateur sensiblement comprise dans un plan perpendiculaire à l'axe de rotation, ladite face d'appui (21) étant située sur la face axialement intérieure de l'extrémité axialement extérieure,
**caractérisé en ce que** l'élément de renfort (20) de l'extrémité axialement extérieure (9) est en totalité située axialement à l'extérieur de la face d'appui (21), **en ce que** le corps comprend en regard du siège d'adaptateur (14) un renfort annulaire de siège (19) **et en ce que** l'adaptateur comprend au moins une bande conductrice (22), amovible ou non, disposée sur la totalité ou sur une partie du pourtour circonférentielle dudit adaptateur, et sur un trajet complet allant du siège d'adaptateur (14) à la jante J s'étendant du siège d'adaptateur à la partie radialement intérieure de l'extrémité axialement intérieure (10).

2. Ensemble selon la revendication 1, **dans lequel** lorsque la bande conductrice (22) est amovible ou non amovible, elle est disposée entièrement à la surface radialement externe au corps.

3. Ensemble selon la revendication 1, **dans lequel** lorsque la bande conductrice (22) est non amovible, elle est partiellement enfouie sous la surface radialement externe du corps.

4. Ensemble selon l'une des revendications précédentes, **dans lequel** la bande conductrice (22) présente une résistivité électrique inférieure ou égale à 10⁸ Ohm.cm, et de préférence inférieure ou égale à 10⁷ Ohm.cm.

5. Ensemble selon la revendication 4, **dans lequel** la bande conductrice (22) est constituée au choix en une lame métallique ou en une composition élastomère comprenant du noir de carbone en une quantité supérieure ou égale à 15%.

6. Ensemble selon la revendication 5, **dans lequel** le noir de carbone de la composition élastomère présente une surface spécifique supérieure ou égale à 500m²/g.

7. Ensemble selon la revendication 5, **dans lequel** lorsque la bande conductrice (22) est non amovible, elle est collée ou réticulée à la composition élastomère du corps.

8. Ensemble selon la revendication 1, **dans lequel** l'élément de renfort de l'extrémité axialement extérieur est disposé radialement à l'extérieur du siège d'adaptateur (14).

9. Ensemble selon la revendication 1, **dans lequel** le renfort annulaire de siège (19) présente un module de compression supérieur ou égale à 1GPa, et de préférence supérieure à 4GPa, et plus préférentiellement supérieur à 10GPa.

10. Ensemble selon la revendication 9, **dans lequel** le renfort annulaire de siège (19) est constitué d'une âme entourée d'un élastomère.

11. Ensemble selon la revendication 10, **dans lequel** l'âme comprend au moins un élément choisi parmi un métal, un matériau composite, un thermoplastique, et leur mélange.

12. Ensemble selon la revendication9, **caractérisé en ce que** le renfort annulaire de siège (19) est constitué d'au moins deux couches de constituants différents disposées en alternance.

13. Ensemble selon la revendication 11, **dans lequel** le matériau composite est réalisé à base de fibres de verre noyées dans un matériau résine.

14. Ensemble selon la revendication 9, **dans lequel** le renfort annulaire de siège (19) a une longueur axiale totale supérieure ou égal à 30% de la largeur du bourrelet du pneumatique, et inférieure à 150% de cette même largeur.

15. Ensemble selon la revendication 9, **dans lequel** le renfort annulaire de siège (19) a une longueur axiale comprise entre 40 et 110% de la largeur du bourrelet du pneumatique.

16. Ensemble selon la revendication 1, **dans lequel** le renfort annulaire de siège (19) a une épaisseur radiale moyenne supérieure ou égale à 0,3mm et inférieure ou égale à 20mm.

17. Ensemble selon la revendication 1, **dans lequel** la jante est constituée en un matériau choisi parmi l'acier, les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales, ou parmi toutes les combinaisons de matériaux.

18. Ensemble selon la revendication 17, **dans lequel** les matériaux composites à base de fibres comprennent des fibres ayant une longueur supérieure ou égale à 5mm.

19. Ensemble selon la revendication 17, **dans lequel** la matrice à base de composés thermodurcissables peut être choisie parmi les résines époxy, le vinylester, les polyesters insaturés, le cyanate ester, le bismaléimide, les résines acryliques, les résines phénoliques, les polyuréthanes et leur combinaison.

20. Ensemble selon la revendication 17, **dans lequel** la matrice à base de composés thermoplastiques est choisie parmi le polypropylène (PP), le polyéthylène (PE), les polyamides (PA), les polyamides semi-aromatiques, le polyester (PET), le polytéréphtalate de butylène (PBT), le polyétheréthercétone (PEEK), le polyéthercétonecétone (PEKK), le polyéthersulfone (PSU), le polyétherimide (PEI), le polyimide (PI), le polyamideimide (PAI), le polyphénylénesulfide (PPS), le polyoxyméthylène (POM), le polyoxyde de phénylène (PPO).

21. Adaptateur pour ensemble roulant ayant un axe de rotation comprenant :
- un pneumatique (P) ayant deux bourrelets et une paroi intérieure,
- une jante (J),
- ledit adaptateur assurant la jonction entre l'un des bourrelets et la jante, et ayant un pourtour circonférentiel,
ladite jante ayant deux sièges (7) de jante et deux crochets (8) de jante,
ledit adaptateur ayant :
- une extrémité axialement intérieure (10) destinée à être monté sur le siège (7) de la jante et comprenant un élément de renfort intérieur (16),
- une extrémité axialement extérieure (9) comprenant un élément de renfort extérieur (20),
- un corps (11) connectant ladite extrémité extérieure avec ladite extrémité intérieure de manière à former une pièce unitaire et comprenant au moins une armature de renforcement principale assurant la liaison entre ledit renfort extérieur et ledit renfort intérieur, et une composition élastomère,
- un siège d'adaptateur (14) sensiblement cylindrique destiné à recevoir l'un desdits bourrelets, ledit siège (14) étant situé à l'extrémité axialement extérieure (9) dudit corps (11),
- une face d'appui (21) d'adaptateur sensiblement comprise dans un plan perpendiculaire à l'axe de rotation, ladite face d'appui (21) étant située sur la face axialement intérieure de l'extrémité axialement extérieure,
**caractérisé en ce que** l'élément de renfort (20) de l'extrémité axialement extérieure (9) est en totalité située axialement à l'extérieur de la face d'appui (21), **en ce que** le corps comprend en regard du siège d'adaptateur (14) un renfort annulaire de siège (19) **et en ce que** l'adaptateur comprend au moins une bande conductrice (22), amovible ou non, disposée sur la totalité ou sur une partie du pourtour circonférentielle dudit adaptateur, et sur un trajet complet allant du siège d'adaptateur (14) à la jante J s'étendant du siège d'adaptateur à la partie radialement intérieure de l'extrémité axialement intérieure (10).

## Patentansprüche

1. Rollend montierte Einheit mit einer Drehachse, die enthält:
- einen Luftreifen (P) mit zwei Wülsten und einer Innenwand,
- mindestens einen Adapter (A),
- eine Felge (J),
- wobei der Adapter die Verbindung zwischen einem der Wülste und der Felge gewährleistet und einen Umfangsumriss hat,
wobei die Felge zwei Felgensitze (7) und zwei Ablaufrinnen (8) hat,
wobei der Adapter hat:
- ein axial inneres Ende (10), das dazu bestimmt ist, auf den Sitz (7) der Felge montiert zu werden und ein inneres Verstärkungselement (16) enthält,
- ein axial äußeres Ende (9), das ein äußeres Verstärkungselement (20) enthält,
- einen Körper (11), der das äußere Ende mit dem inneren Ende so verbindet, dass ein einzelnes Bauteil geformt wird, und mindestens eine Hauptverstärkungsbewehrung, die die Verbindung zwischen der äußeren Verstärkung und der inneren Verstärkung gewährleistet, und eine Elastomerzusammensetzung enthält,
- einen im Wesentlichen zylindrischen Adaptersitz (14), der dazu bestimmt ist, einen der Wülste aufzunehmen, wobei der Sitz (14) sich am axial äußeren Ende (9) des Körpers (11) befindet,
- eine Adapter-Auflageseite (21), die im Wesentlichen in einer Ebene lotrecht zur Drehachse liegt, wobei die Auflageseite (21) sich auf der axial inneren Seite des axial äußeren Endes befindet,
**dadurch gekennzeichnet, dass** das Verstärkungselement (20) des axial äußeren Endes (9) sich vollständig axial außerhalb der Auflageseite (21) befindet,
dass der Körper gegenüber dem Adaptersitz (14) eine ringförmige Sitzverstärkung (19) enthält,
und dass der Adapter mindestens einen leitenden Streifen (22) enthält, entfernbar oder nicht, der auf der Gesamtheit oder auf einem Teil des Umfangsumrisses des Adapters und auf einer vollständigen Bahn angeordnet ist, die vom Adaptersitz (14) bis zur Felge J geht, die sich vom Adaptersitz bis zum radial inneren Teil des axial inneren Endes (10) erstreckt.

2. Einheit nach Anspruch 1, wobei der leitende Streifen (22), wenn er entfernbar oder nicht entfernbar ist, vollständig an der radial äußeren Fläche des Körpers angeordnet ist.

3. Einheit nach Anspruch 1, wobei der leitende Streifen (22), wenn er nicht entfernbar ist, teilweise unter der radial äußeren Fläche des Körpers eingebettet ist.

4. Einheit nach einem der vorhergehenden Ansprüche, wobei der leitende Streifen (22) einen spezifischen elektrischen Widerstand niedriger als oder gleich 10⁸ Ohm.cm, und vorzugsweise niedriger als oder gleich 10⁷ Ohm.cm aufweist.

5. Einheit nach Anspruch 4, wobei der leitende Streifen (22) wahlweise aus einer metallischen Lamelle oder aus einer Elastomerzusammensetzung besteht, die Ruß in einer Menge von mehr als oder gleich 15% enthält.

6. Einheit nach Anspruch 5, wobei der Ruß der Elastomerzusammensetzung eine spezifische Oberfläche größer als oder gleich 500m²/g aufweist.

7. Einheit nach Anspruch 5, wobei der leitende Streifen (22), wenn er nicht entfernbar ist, an die Elastomerzusammensetzung des Körpers geklebt oder vernetzt wird.

8. Einheit nach Anspruch 1, wobei das Verstärkungselement des axial äußeren Endes radial außerhalb des Adaptersitzes (14) angeordnet ist.

9. Einheit nach Anspruch 1, wobei die ringförmige Sitzverstärkung (19) einen Kompressionsmodul größer als oder gleich 1GPa, und vorzugsweise größer als 4GPa, und noch bevorzugter größer als 10GPa aufweist.

10. Einheit nach Anspruch 9, wobei die ringförmige Sitzverstärkung (19) aus einem von einem Elastomer umgebenen Kern besteht.

11. Einheit nach Anspruch 10, wobei der Kern mindestens ein Element enthält, das ausgewählt wird unter einem Metall, einem Verbundmaterial, einem Thermoplast und ihrer Mischung.

12. Einheit nach Anspruch 9, **dadurch gekennzeichnet, dass** die ringförmige Sitzverstärkung (19) aus mindestens zwei Schichten unterschiedlicher Bestandteile besteht, die abwechselnd angeordnet sind.

13. Einheit nach Anspruch 11, wobei das Verbundmaterial auf der Basis von in ein Harzmaterial eingebetteten Glasfasern hergestellt wird.

14. Einheit nach Anspruch 9, wobei die ringförmige Sitzverstärkung (19) eine axiale Gesamtlänge größer als oder gleich 30% der Breite des Wulsts des Luftreifens und kleiner als 150% dieser gleichen Breite hat.

15. Einheit nach Anspruch 9, wobei die ringförmige Sitzverstärkung (19) eine axiale Länge zwischen 40 und 110% der Breite des Wulsts des Luftreifens hat.

16. Einheit nach Anspruch 1, wobei die ringförmige Sitzverstärkung (19) eine mittlere radiale Dicke größer als oder gleich 0,3mm und kleiner oder gleich 20mm hat.

17. Einheit nach Anspruch 1, wobei die Felge aus einem Material besteht, das ausgewählt wird aus Stahl, Aluminium- und/oder Magnesiumlegierungen, Verbundmaterialien auf der Basis von Kohlenstofffasern, Glasfasern, Aramidfasern, Pflanzenfasern, wobei die Fasern in einer Matrix auf der Basis von wärmehärtbaren Verbindungen oder von thermoplastischen Verbindungen, oder aus einer komplexen Verbindung, die ein Elastomer enthält, und einem Komplex auf der Basis von Harz und Fasern enthalten sind, die aus den Kohlenstofffasern, den Glasfasern, den Aramidfasern, den Pflanzenfasern, oder aus allen Materialkombinationen ausgewählt werden.

18. Einheit nach Anspruch 17, wobei die Verbundmaterialien auf Faserbasis Fasern enthalten, die eine Länge von mehr als oder gleich 5mm haben.

19. Einheit nach Anspruch 17, wobei die Matrix auf der Basis von wärmehärtbaren Verbindungen ausgewählt werden kann aus Epoxidharzen, Vinylester, ungesättigten Polyestern, Cyanatester, Bismaleimid, Acrylharzen, Phenolharzen, Polyurethanen und ihrer Kombination.

20. Einheit nach Anspruch 17, wobei die Matrix auf der Basis von thermoplastischen Verbindungen ausgewählt wird aus Polypropylen (PP), Polyethylen (PE), Polyamiden (PA), halbaromatischen Polyamiden, Polyester (PET), Polybutylenterephthalat (PBT), Polyetheretherketon (PEEK), Polyetherketonketon (PEKK), Polyethersulfon (PSU), Polyetherimid (PEI), Polyimid (PI), Polyamidimid (PAI), Polyphenylensulfid (PPS), Polyoxymethylen (POM), Phenylen-Polyoxid (PPO).

21. Adapter für eine rollende Einheit mit einer Drehachse, die enthält:
- einen Luftreifen (P) mit zwei Wülsten und einer Innenwand,
- eine Felge (J),
- wobei der Adapter die Verbindung zwischen einem der Wülste und der Felge gewährleistet und einen Umfangsumriss hat,
wobei die Felge zwei Felgensitze (7) und zwei Ablaufrinnen (8) hat,
wobei der Adapter hat:
- ein axial inneres Ende (10), das dazu bestimmt ist, auf den Sitz (7) der Felge montiert zu werden und ein inneres Verstärkungselement (16) enthält,
- ein axial äußeres Ende (9), das ein äußeres Verstärkungselement (20) enthält,
- einen Körper (11), der das äußere Ende mit dem inneren Ende so verbindet, dass ein einziges Bauteil geformt wird, und der mindestens eine Hauptverstärkungsbewehrung, die die Verbindung zwischen der äußeren Verstärkung und der inneren Verstärkung gewährleistet, und eine Elastomerzusammensetzung enthält,
- einen im Wesentlichen zylindrischen Adaptersitz (14), der dazu bestimmt ist, einen der Wülste aufzunehmen, wobei der Sitz (14) sich am axial äußeren Ende (9) des Körpers (11) befindet,
- eine Adapter-Auflageseite (21), die im Wesentlichen in einer Ebene lotrecht zur Drehachse enthalten ist, wobei die Auflageseite (21) sich auf der axial inneren Seite des axial äußeren Endes befindet,
**dadurch gekennzeichnet, dass** das Verstärkungselement (20) des axial äußeren Endes (9) sich vollständig außerhalb der Auflageseite (21) befindet,
dass der Körper gegenüber dem Adaptersitz (14) eine ringförmige Sitzverstärkung (19) enthält,
und dass der Adapter mindestens einen leitenden Streifen (22) enthält, entfernbar oder nicht, der auf der Gesamtheit oder auf einem Teil des Umfangsumrisses des Adapters und auf einer vollständigen Bahn angeordnet ist, die vom Adaptersitz (14) zur Felge J geht, die sich vom Adaptersitz zum radial inneren Teil des axial inneren Endes (10) erstreckt.

## Claims

1. Rolling mounted assembly having a rotation axis and comprising:
- a tyre (P) having two beads (B) and an inner wall,
- at least one adapter (A),
- a rim (J),
- said adapter providing the connection between one of the beads and the rim, and having a circumferential perimeter,
said rim having two rim seats (7) and two rim flanges (8),
said adapter having:
- an axially inner end (10) that is intended to be mounted on the rim seat (7) and comprises an inner reinforcing element (16),
- an axially outer end (9) that comprises an outer reinforcing element (20),
- a body (11) that connects said outer end to said inner end so as to form a single piece and comprises at least one main reinforcement that provides the connection between said outer reinforcer and said inner reinforcer, and an elastomer composition,
- a substantially cylindrical adapter seat (14) intended to receive one of said beads, said seat (14) being situated at the axially outer end (9) of said body (11),
- an adapter bearing face (21) substantially contained in a plane perpendicular to the rotation axis, said bearing face (21) being situated on the axially inner face of the axially outer end,
**characterized in that** the reinforcing element (20) of the axially outer end (9) is entirely situated axially outside the bearing face (21), **in that** the body comprises, opposite the adapter seat (14), an annular seat reinforcer (19) **and in that** the adapter comprises at least one, optionally removable, conductive strip (22) positioned over all or part of the circumferential perimeter of said adapter and along a complete path extending from the adapter seat (14) to the rim J extending from the adapter seat to the radially inner portion of the axially inner end (10).

2. Assembly according to Claim 1, **in which** when the conductive strip (22) is removable or fixed, it is positioned entirely at the radially outer surface of the body.

3. Assembly according to Claim 1, **in which** when the conductive strip (22) is fixed, it is partially buried under the radially outer surface of the body.

4. Assembly according to one of the preceding claims, **in which** the conductive strip (22) has an electrical resistivity less than or equal to 10⁸ ohm.cm, and preferably less than or equal to 10⁷ ohm.cm.

5. Assembly according to Claim 4, **in which** the conductive strip (22) is made up, as desired, of a metallic leaf or of an elastomer composition comprising carbon black in an amount greater than or equal to 15%.

6. Assembly according to Claim 5, **in which** the carbon black of the elastomer composition has a specific surface area greater than or equal to 500 m²/g.

7. Assembly according to Claim 5, **in which** when the conductive strip (22) is fixed, it is adhesively bonded or crosslinked to the elastomer composition of the body.

8. Assembly according to Claim 1, **in which** the reinforcing element of the axially outer end is positioned radially on the outside of the adapter seat (14).

9. Assembly according to Claim 1, **in which** the annular seat reinforcer (19) has a compression modulus greater than or equal to 1 GPa, and preferably greater than 4 GPa, and more preferably greater than 10 GPa.

10. Assembly according to Claim 1, **in which** the annular seat reinforcer (19) is made up of a core surrounded by an elastomer.

11. Assembly according to Claim 10, **in which** the core comprises at least one element chosen from a metal, a composite material, a thermoplastic, and a mixture thereof.

12. Assembly according to Claim 1, **characterized in that** the annular seat reinforcer (19) is made up of at least two layers of different constituents positioned in alternation.

13. Assembly according to Claim 11, **in which** the composite material is made from glass fibres embedded in a resin material.

14. Assembly according to Claim 1, **in which** the annular seat reinforcer (19) has an overall axial length greater than or equal to 30% of the width of the bead of the tyre, and less than 150% of this same width.

15. Assembly according to Claim 1, **in which** the annular seat reinforcer (19) has an axial length between 40 and 110% of the width of the bead of the tyre.

16. Assembly according to Claim 1, **in which** the annular seat reinforcer (19) has a mean radial thickness greater than or equal to 0.3 mm and less than or equal to 20 mm.

17. Assembly according to Claim 1, **in which** the rim is made from a material selected from steel, alloys of aluminium and/or of magnesium, composite materials based on carbon fibres, glass fibres, aramid fibres, plant fibres, said fibres being comprised in a matrix based on thermosetting compounds or on thermoplastic compounds, or from a complex compound comprising an elastomer and a complex based on resin and fibres selected from carbon fibres, glass fibres, aramid fibres, plant fibres or from any combination of materials.

18. Assembly according to Claim 17, **in which** the fibre-based composite materials comprise fibres having a length greater than or equal to 5 mm.

19. Assembly according to Claim 17, **in which** the matrix based on thermosetting compounds may be selected from epoxy resins, vinyl ester, unsaturated polyesters, cyanate ester, bismaleimide, acrylic resins, phenolic resins, polyurethanes and combinations thereof.

20. Assembly according to Claim 17, **in which** the matrix based on thermoplastic compounds is selected from polypropylene (PP), polyethylene (PE), polyamides (PAs), semiaromatic polyamides, polyester (PET), polybutylene terephthalate (PBT), polyetheretherketone (PEEK), polyetherketoneketone (PEKK), polyethersulphone (PSU), polyetherimide (PEI), polyimide (PI), polyamideimide (PAI), polyphenylene sulphide (PPS), polyoxymethylene (POM), polyphenylene oxide (PPO).

21. Adapter for a mounted assembly having a rotation axis comprising:
- a tyre (P) having two beads and an inner wall,
- a rim (J),
- said adapter providing the connection between one of the beads and the rim, and having a circumferential perimeter,
said rim having two rim seats (7) and two rim flanges (8),
said adapter having:
- an axially inner end (10) that is intended to be mounted on the rim seat (7) and comprising an inner reinforcing element (16),
- an axially outer end (9) that comprises an outer reinforcing element (20),
- a body (11) that connects said outer end to said inner end so as to form a single piece and comprising at least one main reinforcement that provides the connection between said outer reinforcer and said inner reinforcer, and an elastomer composition,
- a substantially cylindrical adapter seat (14) intended to receive one of said beads, said seat (14) being situated at the axially outer end (9) of said body (11),
- an adapter bearing face (21) substantially contained in a plane perpendicular to the rotation axis, said bearing face (21) being situated on the axially inner face of the axially outer end,
**characterized in that** the reinforcing element (20) of the axially outer end (9) is entirely situated axially outside the bearing face (21), **in that** the body comprises, opposite the adapter seat (14), an annular seat reinforcer (19) **and in that** the adapter comprises at least one, optionally removable, conductive strip (22) positioned over all or part of the circumferential perimeter of said adapter and along a complete path extending from the adapter seat (14) to the rim J extending from the adapter seat to the radially inner portion of the axially inner end (10).
